# EUROPEAN PATENT SPECIFICATION

(11) **EP 2 571 637 B1**
(45) Date of publication and mention of the grant of the patent: **27.03.2019**
(21) Application number: 11782814.5
(22) Date of filing: 17.05.2011
(51) Int. Cl.: B21D 37/16, B21B 37/74, B21D 39/02, C22F 1/04

(54) **METHOD AND APPARATUS FOR FORMING MATERIALS WITH LOW DUCTILITY**
VERFAHREN UND VORRICHTUNG ZUR FORMUNG VON MATERIALIEN MIT GERINGER FORMBARKEIT
PROCÉDÉ ET APPAREIL POUR FORMER DES MATIÈRES À FAIBLE DUCTILITÉ

(30) Priority: 17.05.2010 US 345348 P
(43) Date of publication of application: 27.03.2013
(73) Proprietor: Magna International Inc., Aurora, ON L4G 7K1 (CA)
(72) Inventor: SHULKIN, Boris, West Bloomfield, Michigan 48322 (US); AMTMANN, Maximilian, Brampton, Ontario L6T 5R3 (CA); GU, Hongping, Newmarket, Ontario L3X 0A1 (CA)
(74) Representative: Glawe, Delfs, Moll
(86) International application number: PCT/CA2011/000583
(87) International publication number: WO 2011/143757

(56) References cited:
- WO-A1-98/50595
- US-A1- 2005 229 377
- US-A1- 2005 284 204
- US-A1- 2005 284 204
- US-A1- 2009 230 728

## Description

### Field Of The Invention

The present invention generally relates to the field of forming materials of low ductility, and more particularly to a method and an apparatus for forming materials of low ductility.

### Background Of The Invention

Many industry areas aim to reduce weight in their products while maintaining a structural integrity of the product. In this context, more lightweight metals and metal alloys, such as aluminum, magnesium and their alloys, have gained increasing interest owing to their relatively low density and their relatively high specific strength in comparison to more traditional metal or metal alloys, such as steel. Nevertheless, these materials have a relatively lower ductility which can lead to the formation of cracks or other defects when these materials are bent or folded.

In materials science, ductility is a solid material's ability to deform under tensile stress. Ductility is especially important in metalworking, as materials that crack or break under stress cannot be manipulated using metal forming processes, such as hammering, bending, rolling, roller hemming, and/or drawing.

Therefore, it is desirable to provide a forming process and apparatus for forming materials of relatively low ductility.

It is desirable to provide a roller hemming process and apparatus for forming materials with relatively low ductility.

Systems for hemming the edges of two or more metal components together to form a part are well known. Such systems are commonly used in the manufacture of various automotive body parts, such as doors, lift gates, hoods, etc., as well as in the manufacture of a variety of other manufactured goods.

Hemmed joints are well known in the automobile industry and, amongst other things, are used to join together inner and outer metal panels of doors and other closure members of automotive vehicles. Resulting hem joints each generally include a flange of metal of one panel being folded over onto an edge of another panel. Typically, in automotive vehicle construction, a peripheral flange or outer edge region of an outer panel is folded over and onto an outer edge region of an inner panel. The resulting hemmed joint provides a finished edge and a mechanical connection between the two panels that adds strength and rigidity to the member.

When, for example, an automobile door is to be fabricated in a prior art hemming press, a previously stamped outer door panel is loaded onto an appropriately shaped anvil and the previously stamped inner door member is then placed atop the inside of the outer door panel and is held in place, with a clamp or other suitable mechanism, with the edges of the outer door panel and the inner door member overlying each other. The hemming press is then activated, moving an appropriately shaped first hemming beam through a complex motion, over and onto the anvil, to fold the edges of the outer door panel and inner door member over onto each other to a first extent, typically about forty-five degrees.

The first hemming beam is then removed and a second appropriately shaped hemming beam is then moved through another complex motion, over and onto the anvil, to complete the hem by further folding the edges of the outer door panel and inner door member over onto each other to complete the part.

The use of aluminum and/or magnesium and their alloys in the manufacture of automotive bodies and components has increased due to the desire to reduce the weight of the vehicles for improved fuel economy, for example. Aluminum and/or magnesium and their alloys have a relatively low ductility which can lead to the formation of cracks or other defects in the bent or folded structure resulting from the hemming process of an inner and an outer panel.

Roller hemming is a relatively recent development for joining inner and outer body panels by folding the outer flange over the edge of the inner panel. This process can create a sharp hem appearance comparable to conventional hemmers for typical steel sheet panels. A roller hemming apparatus and method is known from US 2005/0284204 A1. However, when hemming metal or metal alloy panels of low ductility, conventional hemmers must be modified to reduce the bending severity of the metal or metal alloy sheets in order to prevent cracking along the hemline. With conventional hemmers, it is very difficult to produce sharp, flat hems.

### Summary Of The Invention

An object of the present invention is to overcome the problems delineated hereinabove. In accordance with this object, the present invention provides a method of forming a material of low ductility comprising the steps of providing a first sheet made from a material of low ductility, providing an integrated forming device comprising a heat source and a forming element, and moving the forming element relative to the first sheet along a forming direction while simultaneously heating a localized portion of the first sheet along the forming direction at a substantially constant predetermined distance in front of the forming element. The predetermined distance is selected so as to yield a predetermined temperature to achieve a predetermined ductility at the localized portion of the first sheet when the forming element reaches the localized portion of the first sheet.

According to the invention, the step of heating comprises irradiating the localized portion of the first sheet with an energy beam. The energy beam is a laser beam. Therefore, the heat source is a laser source. In an alternative embodiment which is not part of the invention, the heat source can also be a source of induction heat.

In accordance with a further embodiment of the invention the forming element comprises a roll forming element. The roll forming element can have one or more rollers and the forming step can be performed in one or more roller passes.

In accordance with an embodiment of the instant invention, the forming operation can be a bending, a roller hemming, a hammering, a rolling, and/or a drawing operation.

In accordance with another aspect of the invention, the laser beam has a large spot at the predetermined forming area. The large spot laser beam can be chosen to be a defocused beam or an enlarged beam produced by beam shaping optical components. Alternatively, the large spot laser beam is a raw beam generated directly by a laser source. Furthermore, the laser beam can be selected to be a round beam or a rectangular beam.

In accordance with a further aspect of the invention, the low ductile material is made from aluminum, aluminum alloy, magnesium, and/or magnesium alloy.

In accordance with another aspect of the invention, the step of heating is performed at a temperature in a range between about 150°C to about 500°C.

According to the invention, the step of heating comprises the step of varying the incident angle of the laser beam on the localized portion of the first sheet.

In accordance with a further embodiment of the invention, the method further includes the step of providing a programmable logic control for retrieving a predetermined forming temperature for the material of low ductility and an incident angle of the laser beam on the localized portion of the first sheet.

In accordance with another aspect of the invention, a method is provided comprising the further steps of providing a second sheet adjacent to the first sheet, securing the first sheet relative to the second sheet, said first sheet having a peripheral flange and said second sheet having a peripheral edge, moving the forming element relative to the first and second sheet to fold the peripheral flange of the first sheet over the peripheral edge of the second sheet along a forming direction along the peripheral flange while simultaneously heating a localized portion of the peripheral flange along the forming direction at a substantially constant predetermined distance in front of the forming element. The predetermined distance is selected so as to yield a predetermined temperature to achieve a predetermined ductility at the localized portion of the first sheet when the forming element reaches the localized portion of the first sheet.

In accordance with a further aspect of the invention, the invention provides an apparatus for forming a material of low ductility comprising an integrated forming device including a forming element and an energy source, wherein the forming element and the energy source advance simultaneously relative to the material of low ductility. The forming device can comprises a roller forming element. The energy source is a laser source. In alternative embodiments not being part of the invention the energy source is an infrared source or a source of inductive heat.

In accordance with another aspect of the invention there is provided a method of roller hemming a panel assembly including an outer panel and an inner panel comprising the steps of providing the outer panel having a peripheral flange, providing the inner panel adjacent the outer panel, the inner panel having a peripheral edge, securing the outer panel relative to the inner panel, and moving a roller element relative to the outer and the inner panel to fold the peripheral flange of the outer panel over the peripheral edge of the inner panel along a forming direction along the peripheral flange while simultaneously heating a localized portion of the peripheral flange along the forming direction at a substantially constant predetermined distance in front of the roller element. The predetermined distance is selected so as to yield a predetermined temperature to achieve a predetermined ductility at the localized portion of the peripheral flange when the roller element reaches the localized portion of the peripheral flange. The step of heating comprises the step of irradiating the localized portion with an energy beam. The energy beam is a laser beam. In accordance with an embodiment of the invention, the roller element comprises at least one roller. Alternatively, two or more rollers can be employed. If desired, the hemming operation can be performed in one or more passes.

In accordance with another aspect of the invention a laser beam aiming angle can be varied with a folding angle of the roller element so that an incident spot of the laser beam on the surface of the peripheral flange is optimized.

In accordance with another aspect of the invention, the method comprises the further step of determining a forming temperature at the localized portion in dependence upon the material prior to the forming step. The method can comprise the further step of determining a number of forming steps in dependence upon a degree of bending.

In accordance with a further aspect of the invention, the method includes the further step of pre-hemming the peripheral flange of the outer panel.

In accordance with another aspect of the invention, there is provided a roller hemming apparatus for hemming a panel assembly including an outer panel and an inner panel, the apparatus comprising a roller element for forming the panel assembly, a retaining device for positioning the panel assembly relative to the roller element; and a heat source moving in unison with the roller element, wherein the heat source is for emitting an energy beam onto a localized portion of the panel assembly at a substantially constant predetermined distance in front of the roller element. The predetermined distance is selected so as to yield a predetermined temperature to achieve a predetermined ductility at the localized portion of the panel assembly when the roller element reaches the localized portion of the panel assembly.

This and other objects of the invention can be more fully appreciated from the following detailed description of the preferred embodiments.

### Brief Description of the Drawings

Exemplary embodiments of the invention will now be described in conjunction with the following drawings wherein like numerals represent like elements, and wherein:
Figs. 1a and 1b show a flat sheet before and after undergoing a forming process in accordance with the instant invention;
Figs. 2-6 are schematic presentations illustrating a hemming process in accordance with an embodiment of the invention;
Fig. 7 shows a photographic image of a hemmed panel assembly made by conventional roller hemming;
Figs. 8 and 9 show a partial roller hemming apparatus in accordance with the instant invention combining a laser head with a roller hemming device;
Figs. 10-12 show the panel assembly in the roller hemming apparatus of the instant invention and how the laser beam is applied simultaneously in front of the hemming rollers; and
Fig. 13 shows a photographic image of a hem line produced in accordance with the instant invention.

### Detailed Description Of The Preferred Embodiments

In accordance with the present invention, a process and an apparatus for forming materials with a relatively low ductility are provided. In accordance with another aspect of the invention, a roller hemming process and apparatus are provided for hemming materials with a relatively low ductility. The process and apparatus of the present invention are particular advantageous for roller hemming inner and outer panels comprised of metal or metal alloys having a low ductility. Examples of such metal or metal alloys are magnesium and aluminum and their alloys.

In the context of this application, the term low ductile material refers to any material having a ductility such that a forming operation would introduce cracks or other defects in the formed material.

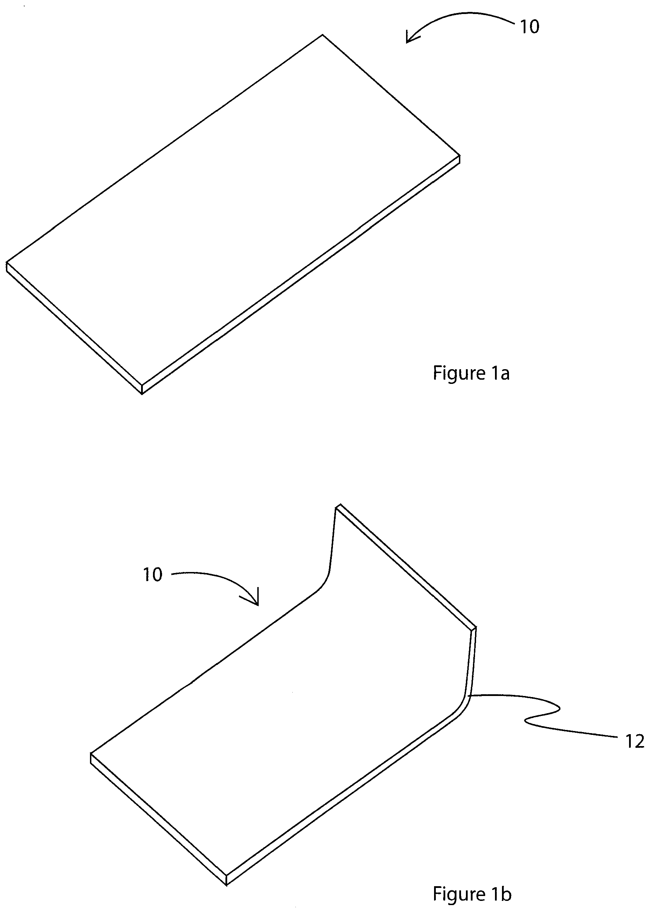

Having regard to Figs. 1a and 1b, a flat sheet 10 is shown before undergoing a forming process (Fig. 1a) and after undergoing a forming process in accordance with the instant invention (Fig. 1b) along an edge 12. In accordance with the instant invention, sheet 10 is made from a relatively low ductile material, such as aluminum, magnesium and their alloys, and the bend along edge 12 is formed in accordance with a process and apparatus of the instant invention. Exemplary forming processes include hammering, bending, rolling, roller hemming, and/or drawing.

In accordance with the instant invention, a method and an apparatus for forming materials with relatively low ductility are provided. An integrated forming device is provided which combines a heat source, such as a laser source with a forming device. The heat source heats the metal or metal alloy to a predetermined temperature in dependence upon the low ductile material to be formed at a predetermined location where the material is to be formed, so as to increase the ductility of the metal or metal alloy at the predetermined location. The forming device simultaneously performs the forming operation at the predetermined location as the heat source applies heat to the predetermined location. The heat source emits an energy beam which advances the forming device as the integrated forming device advances along the predetermined location where the material is to be formed. The metal or metal alloy of the sheet to be formed is heated to an optimum temperature to achieve a predetermined ductility that allows the sheet to be formed without showing surface cracks or any other defects in the formed sheet. Therefore, the process and apparatus in accordance with the present invention provide heat to a localized area of the sheet to be formed and hence allow the material to be formed at a desired optimum temperature and allow to introduce minimum heat input to avoid unnecessary heat distortion in the formed sheet. Moreover, the process and apparatus in accordance with the instant invention also allow for a reduction in cycle time.

In accordance with another aspect of the invention, the process and apparatus of the instant invention are particularly advantageous for roller hemming applications where an extreme bend is formed in the low ductile material.

Thus, in accordance with an aspect of the present invention, a roller hemming apparatus is provided with an energy source, such as a laser source. Examples of laser sources that can be used in accordance with the instant invention are carbon dioxide lasers, Nd:YAG lasers, and laser diodes. The laser head emits a laser beam which advances the hemming rollers. The laser beam heats the metal or metal alloy about the predetermined hemline so as to increase the ductility of the metal or metal alloy. The hemming rollers follow the laser beam so that the heating and the hemming operation are performed simultaneously on the metal or metal alloy while it is still warm, i.e. a warm-forming process. The metal or metal alloy of the panels to be hemmed is heated to an optimum temperature to achieve a predetermined ductility that allows a hem to be formed without showing surface cracks or any other defects. The use of a laser is advantageous as it provides a short and localized heating about the predetermined hemming location or hemline. Therefore, a laser-assisted hemming process in accordance with the present invention provides heat to a localized area of the metal or metal alloy panels and hence allows to minimize a heat input, reduces distortion of the panels to be hemmed, and can be performed in a relatively short period of time. On the contrary, some prior art methods disclose a pre-annealing process to increase the ductility of some panels so as to achieve a clean hemline, which would significantly increase the cycle time. In accordance with the instant invention, the cycle time for hemming materials with low ductility can be reduced by simultaneously heating and hemming at the predetermined hemming location or hem line.

In accordance with a further aspect of the invention, the laser beam has a large spot at the irradiated location which is covering the entire bending radius or curvature area so as to allow more material to be involved in the stretch. Examples of enlarged laser beams are a defocused beam or an enlarged beam produced by beam shaping optics. Alternatively, a raw beam of proper size directly from the laser can be used. In accordance with a further embodiment of the invention, the geometry of the laser beam can be selected in accordance with a particular application. For example, the laser beam can be a round beam or a rectangular beam.

In accordance with an aspect of the invention, a defocused laser beam is used to provide a relatively small amount of power. The panels to be hemmed are typically heated to a temperature between about 150-500°C for panels made from aluminum, magnesium, and/or their alloys. Nevertheless, the particular temperature depends on the material of which the panels are comprised so as to locally increase the ductility of the panel about the predetermined bending location or hem line.

In accordance with yet another aspect of the invention, the type of low ductile material determines the optimum temperature to which the metal or metal alloy is heated as well as an incident angle of the laser beam.

In accordance with a further aspect of the invention, a programmable logic control (PLC) can be used to retrieve an optimum forming temperature and incident angle of the laser beam.

In accordance with yet another aspect of the invention, the forming operation can be carried out in a single roller forming step or in two or more roller forming steps while simultaneously applying an energy beam to the forming location.

In accordance with another aspect of the invention, the forming temperature and the number of forming steps are selected in dependence upon a degree of bending or in other words, in dependence upon a complexity of a forming shape of the formed product. For example, a 5K Aluminum alloy can be formed in a single rolling step if the forming temperature generated by the laser beam during forming is between about 250°C -260°C, or in two rolling steps if the forming temperature generated by the laser beam during forming is between 180°C -220°C.

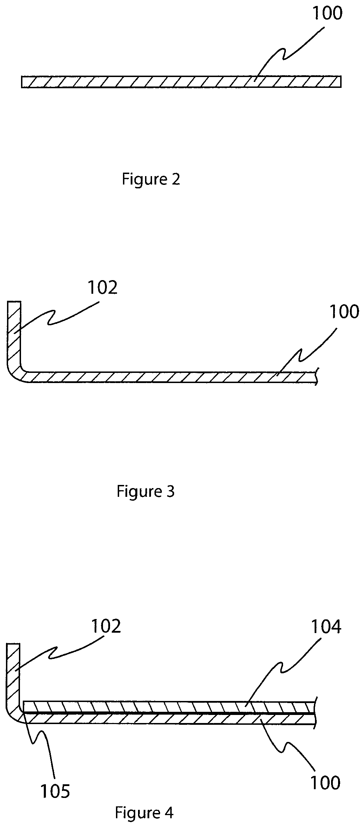

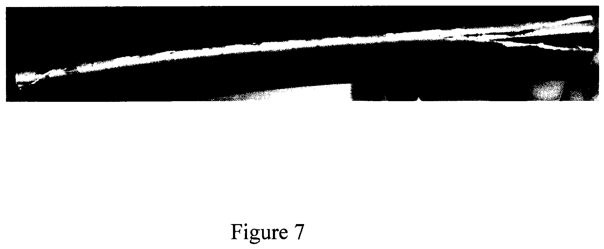

Turning now to Figs. 2-6, an outer panel 100 and an inner panel 104 are provided. The outer and inner panels may be prepared by various metal forming processes, such as roll forming, drawing or stamping and cutting. For example, motor vehicle body panels, doors, hoods, fenders, tailgates, trunks and deck lids can be constructed by stamping an outer sheet metal panel and separately stamping an inner sheet metal reinforcing panel and then joining the two panels together by hemming a flange of the periphery of the outer panel over an adjacent edge of the inner panel to secure the panels together. Advantageously, the outer panel is slightly larger than the inner panel to provide a border flange portion along the periphery of the outer panel that can be folded over the peripheral edge of the inner panel to define the hem flange that connects the two panels. Outer panel 100 and inner panel 104 may be composed of various types of steel, aluminum, aluminum alloys, magnesium, and/or magnesium alloys. However, aluminum, magnesium and their alloys have a relatively low ductility at room temperature and if hemmed at this temperature usually show some surface defects about the hem line, such as cracks, when processed at this temperature. Fig. 7, for example, shows a photographic image of a panel assembly made by conventional roller hemming, and wherein the outer panel of the panel assembly is made from a low ductile material. The panel assembly was hemmed at room temperature and it can be seen from the photographic image that the hemmed assembly has a crack about the hem line.

In accordance with an embodiment of the present invention, outer panel 100 is pre-hemmed about a flange 102 along a periphery of the outer panel 100. Fig. 2 shows the flange to be pre-hemmed at about 90 degrees. Alternatively, the pre-hemming can be performed at various different angles. In accordance with another embodiment of the invention as discussed heretofore, the hemming operation can be done in a single rolling step in which case the pre-hemming step is omitted.

Fig. 4 shows an inner panel 104 positioned adjacent flange 102 of outer panel 100. Both panels are assembled and the panel assembly is fastened with a suitable retainer, such as a clamping device (not shown) for holding the panel assembly in position during the hemming operation. Alternatively, the inner and outer panels can be secured by means of an adhesive.

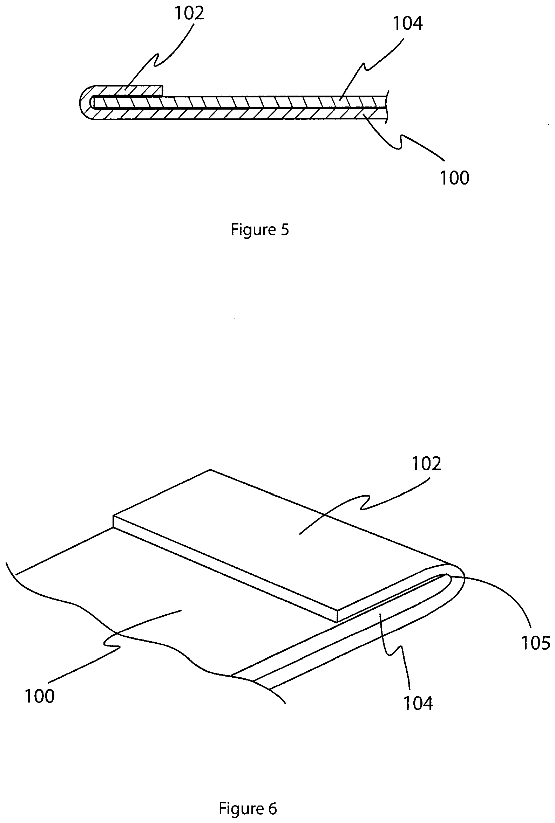

Fig. 5 shows a schematic cross-sectional view of the hemmed panel assembly wherein the flange 102 of outer panel 100 is bend from the 90 degree pre-hemming angle to a 180 degree hemmed angle, i.e. the flange 102 is folded over the peripheral edge 105 of the inner panel 104 to define the hem flange that joins the two panels. Fig. 6 shows an isometric view of the hemmed panel assembly.

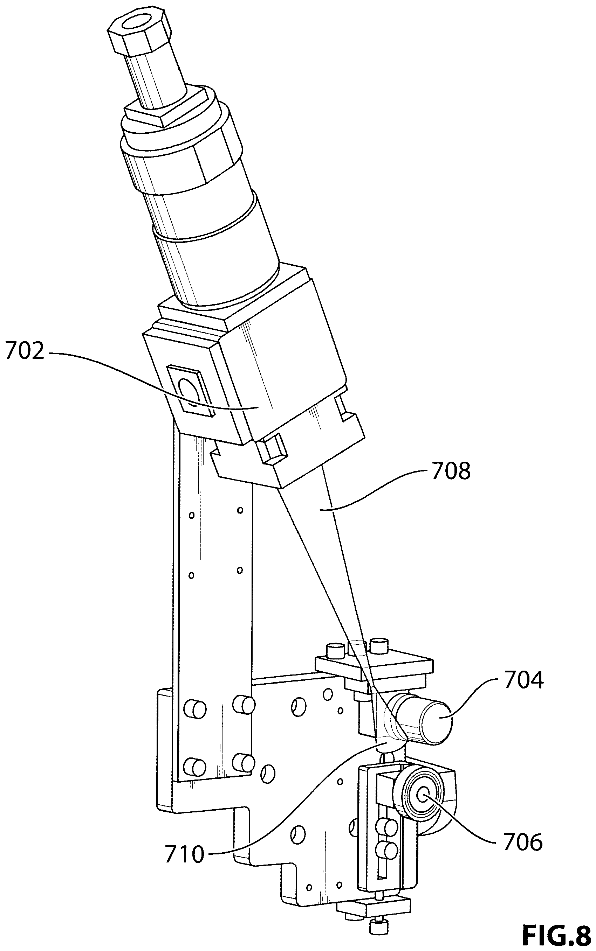

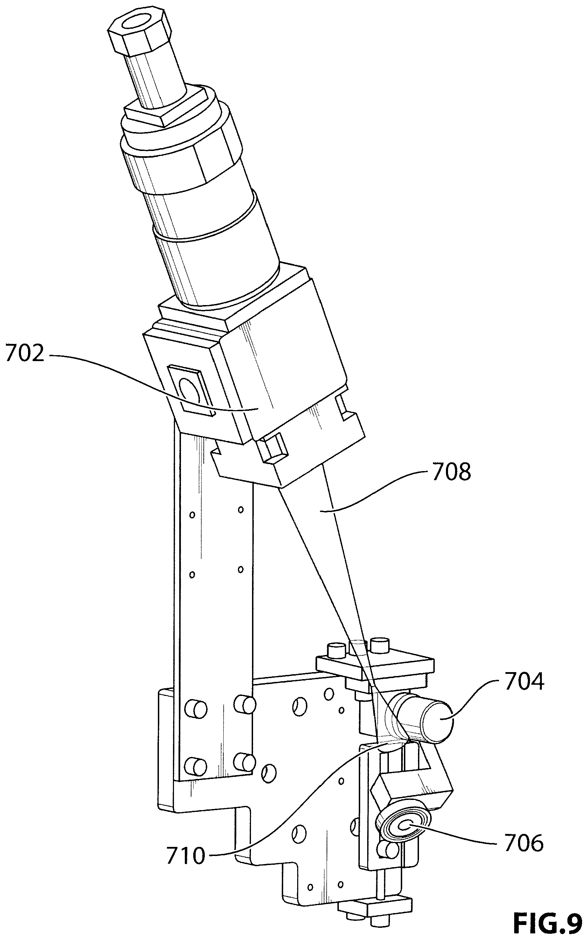

Figs. 8 and 9 show a partial apparatus in accordance with the instant invention illustrating two configurations for forming employing two different folding angles. A laser head 702 is combined with a roller hemming apparatus as indicated by hemming rollers 704 and 706. A panel assembly (not shown) comprised of an outer panel and an inner panel is held in a retaining device (not shown) and is provided between the hemming rollers 704 and 706. Laser head 702 emits a laser beam 708 which is a defocused beam 710 projected onto the panel assembly provided between the hemming rollers 704 and 706. The laser beam is projected onto the panel assembly and advances the hemming rollers. The laser beam is used to apply the heat directly to the bending location to improve its elongation while the roller hemming apparatus and the remaining part of the panel assembly remain at room temperature. The heat is introduced into the bending region in real time, simultaneously with the roller hemming. The laser beam is applied immediately in front of the hemming rollers. Therefore, the localized heated bending location moves dynamically with the roller hemming apparatus of the instant invention. Furthermore, the laser beam aiming angle can be varied with the folding angle of the roller so that the incident spot of the laser beam on the surface of the flange is optimized.

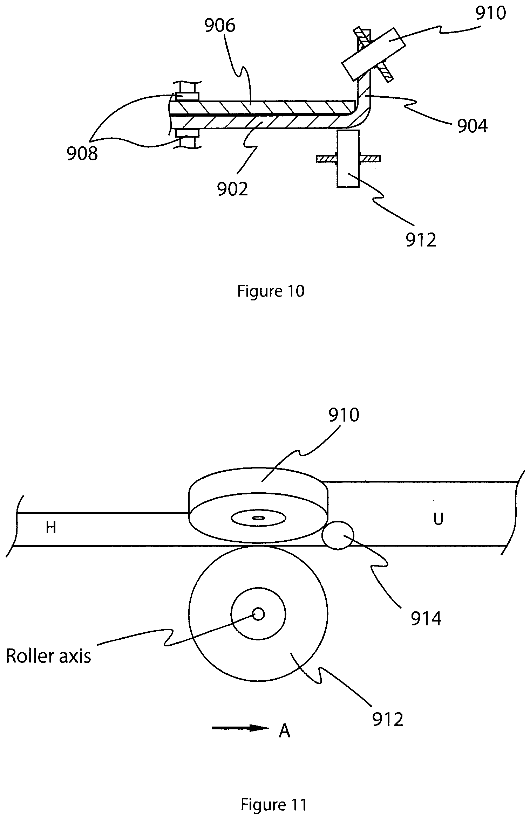

Fig. 10 shows a schematic cross-sectional side view of a panel assembly comprising an outer panel 902 having a pre-hemmed flange 904 and an inner panel 906 positioned in a retaining device 908 between hemming rollers 910 and 912. Fig. 11 shows a schematic top view of a partially hemmed panel assembly. Arrow A indicates the direction in which the hemming rollers 910, 912 advance during the roller hemming process. As can be seen from Fig. 11, the hemming rollers 910, 912 are advanced by a laser beam 914 which simultaneously applies heat directly to the bending location as the roller hemming apparatus moves over the panel assembly to fold the flange of the outer panel over a peripheral edge of the inner panel. In accordance with an embodiment of the instant invention, the inventive roller hemming apparatus combines a laser head with a roller hemming apparatus wherein the laser head and the hemming rollers move as a pair and wherein the laser beam advances the hemming rollers. Region H in Fig. 11 shows a hemmed region of the panel assembly after the roller hemming apparatus in accordance with the instant invention has moved across it and approaching unhemmed region U.

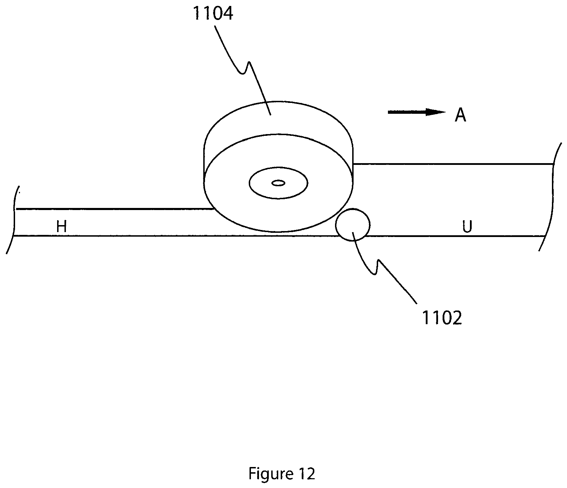

Fig. 12 shows another embodiment of the present invention wherein a single roller is used in the inventive roller hemming apparatus. Laser beam 1102 is applied to the bending location before roller 1104 moves across the bending location. The direction of the roller movement is indicated by arrow A in Fig. 12 and advances from a hemmed region "H" to an unhemmed region "U".

In an alternative embodiment not being part of the invention, as was discussed heretofore, in stead of a laser head other energy beam sources, such as an infrared source or inductive heat source, can be employed in accordance with the invention. Nevertheless, the use of a laser is advantageous since it can be easily adjusted to any application, i.e. the beam size and shape, incident angle, and intensity of the laser beam can be easily adjusted to any material to be formed. Moreover, the use of beam shaping optical components can provide a predetermined laser beam such that the incident energy beam effects the ductility of the material to be formed in a predetermined manner to yield a formed product without any cracks or other defects.

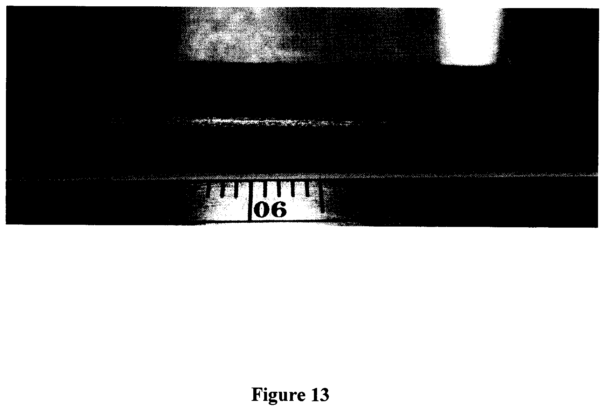

Fig. 13 shows a photographic image of a hemmed panel in accordance with an embodiment of the instant invention. As can be seen from this image, the formed panel assembly is free from cracks and other defects.

Furthermore, in accordance with another aspect of the instant invention, the roller hemming apparatus can be used to achieve three-dimensional flat hemming, i.e. non-straight hem lines can be produced with the roller hemming apparatus of the instant invention, such as for example a round hem line moving around the corner of a motor vehicle hood.

Advantageously, the process and apparatus of the instant invention, employ an energy beam, such as a laser beam, to apply heat directly to a bending location to improve its elongation. The heat is introduced into the bending region in real time, i.e. simultaneously with the forming step, such as roller hemming. The energy beam is applied directly in front of the forming device. The energy beam aiming angle can be varied with the folding angle of the roller so that the incident spot of the energy beam on the surface of the flange is optimized.

It should be appreciated that the foregoing description is illustrative in nature and that the present invention includes modifications, changes, and equivalents thereof, without departure from the scope of the invention , defined by the appended claims.

## Claims

1. A method of forming a material of low ductility comprising:
providing a first sheet (10) made from a material of low ductility;
providing an integrated forming device comprising a heat source and a forming element;
and moving the forming element relative to the first sheet (10) along a forming direction while simultaneously heating a localized portion of the first sheet (10) along the forming direction at a substantially constant predetermined distance in front of the forming element, wherein heating comprises irradiating the localized portion of the first sheet (10) with a laser beam (1102, 708, 914), **characterised in that** the heating further comprises varying the incident angle of the laser beam (1102, 708, 914) on the localized portion of the first sheet (10).

2. The method as defined in claim 1, wherein the material of low ductility is at least one of aluminum, aluminum alloy, magnesium, and magnesium alloy.

3. The method as defined in claim 1, comprising providing a programmable logic controller for retrieving a predetermined forming temperature for the material of low ductility and an incident angle of the laser beam (1102, 708, 914) on the localized portion of the first sheet (10).

4. A method as defined in claim 1 comprising: providing a second sheet (10) adjacent to the first sheet (10); and securing the first sheet (10) relative to the second sheet (10), said first sheet (10) having a peripheral flange (102) and said second sheet (10) having a peripheral edge (105); wherein moving the forming element comprises moving the forming element relative to the first and second sheet (10) to fold the peripheral flange (102) of the first sheet (10) over the peripheral edge (105) of the second sheet (10) along the forming direction along the peripheral flange (102) while simultaneously heating the localized portion of the first sheet (10) within the peripheral flange (102) thereof and along the forming direction at a substantially constant predetermined distance in front of the forming element.

5. The method as defined in claim 1 or 4, wherein the predetermined distance is selected so as to yield a predetermined temperature to achieve a predetermined ductility at the localized portion when the roller element reaches the localized portion.

6. The method as defined in claim 4, wherein heating comprises irradiating the localized portion with an energy beam.

7. The method as defined in claim 1 or 6, wherein the localized portion is heated to a temperature in a range from about 150 °C to about 500 °C by means of the energy beam.

8. An apparatus for forming a material of low ductility comprising an integrated forming device including a forming element and an energy source, wherein the forming element and the energy source advance simultaneously relative to the material of low ductility, **characterised in that** the energy source is a laser source which is adapted to vary the incident angle of the laser beam (1102, 708, 914) on the localized portion of the first sheet (10).

9. The apparatus as defined in claim 8 wherein the forming element comprises a roll forming element having at least one roller.

10. The apparatus as defined in claim 8, the apparatus being a hemming apparatus comprising:
a retaining device (908) for positioning a panel assembly relative to the forming element, the panel assembly including an outer panel (100, 902) formed from the material of low ductility and an inner panel (104, 906),
wherein the forming element is a roller element; and
wherein the energy source is a heat source moving in unison with the roller element, the heat source disposed to emit an energy beam onto a localized portion of the panel assembly at a substantially constant predetermined distance in front of the roller element.

11. The apparatus as defined in claim 10, wherein the predetermined distance is selected so as to yield a predetermined temperature to achieve a predetermined ductility at the localized portion of the panel assembly when the roller element reaches the localized portion of the panel assembly.

## Patentansprüche

1. Verfahren zum Formen eines Materials mit geringer Formbarkeit, umfassend:
Bereitstellen einer ersten Platte (10), die aus einem Material mit geringer Formbarkeit hergestellt ist;
Bereitstellen einer integrierten Formeinrichtung, die eine Wärmequelle und ein Formelement umfasst; und
Bewegen des Formelements relativ zu der ersten Platte (10) entlang einer Formrichtung, während gleichzeitig ein örtlich begrenzter Abschnitt der ersten Platte (10) in einem entlang der Formrichtung im Wesentlichen konstanten vorbestimmten Abstand vor dem Formelement erwärmt wird, wobei das Erwärmen ein Bestrahlen des örtlich begrenzten Abschnitts der ersten Platte (10) mit einem Laserstrahl (1102, 708, 914) umfasst,
**dadurch gekennzeichnet, dass** das Erwärmen außerdem ein Variieren des Einfallswinkels des Laserstrahls (1102, 708, 914) auf den örtlich begrenzten Abschnitt der ersten Platte (10) umfasst.

2. Verfahren nach Anspruch 1, wobei das Material mit geringer Formbarkeit mindestens eines von Aluminium, einer Aluminiumlegierung, Magnesium oder einer Magnesiumlegierung ist.

3. Verfahren nach Anspruch 1, das ein Bereitstellen einer programmierbaren Logiksteuereinheit zum Abrufen einer vorbestimmten Formtemperatur für das Material mit geringer Formbarkeit und eines Einfallswinkels des Laserstrahls (1102, 708, 914) auf den örtlich begrenzten Abschnitt der ersten Platte (10) umfasst.

4. Verfahren nach Anspruch 1, umfassend: Bereitstellen einer zweiten Platte (10) in der Nähe der ersten Platte (10); und Befestigen der ersten Platte (10) in Bezug auf die zweite Platte (10), wobei die erste Platte (10) einen peripheren Flansch (102) aufweist und wobei die zweite Platte (10) einen peripheren Rand (105) aufweist; wobei das Bewegen des Formelements ein Bewegen des Formelements relativ zu der ersten und der zweiten Platte (10) umfasst, um den peripheren Flansch (102) der ersten Platte (10) über den peripheren Rand (105) der zweiten Platte (10) entlang der Formrichtung entlang des peripheren Flanschs (102) zu falten, während gleichzeitig der örtlich begrenzte Abschnitt der ersten Platte (10) innerhalb des peripheren Flanschs (102) derselben und in einem entlang der Formrichtung im Wesentlichen konstanten vorbestimmten Abstand vor dem Formelement erwärmt wird.

5. Verfahren nach Anspruch 1 oder 4, wobei der vorbestimmte Abstand so ausgewählt wird, dass eine vorbestimmte Temperatur bereitgestellt wird, um eine vorbestimmte Formbarkeit an dem örtlich begrenzten Abschnitt zu erlangen, wenn das Walzenelement den örtlich begrenzten Abschnitt erreicht.

6. Verfahren nach Anspruch 4, wobei das Erwärmen ein Bestrahlen des örtlich begrenzten Abschnitts mit einem Energiestrahl umfasst.

7. Verfahren nach Anspruch 1 oder 6, wobei der örtlich begrenzte Abschnitt mithilfe des Energiestrahls auf eine Temperatur in einem Bereich von ungefähr 150 °C bis ungefähr 500 °C erwärmt wird.

8. Vorrichtung zum Formen eines Materials mit geringer Formbarkeit, die eine integrierte Formeinrichtung umfasst, die ein Formelement und eine Energiequelle aufweist, wobei das Formelement und die Energiequelle gleichzeitig relativ zu dem Material mit geringer Formbarkeit vorwärts bewegt werden,
**dadurch gekennzeichnet, dass** die Energiequelle eine Laserquelle ist, die geeignet ist zum Variieren des Einfallswinkels des Laserstrahls (1102, 708, 914) auf den örtlich begrenzten Abschnitt der ersten Platte (10).

9. Vorrichtung nach Anspruch 8, wobei das Formelement ein Walzenformelement umfasst, das mindestens eine Walze aufweist.

10. Vorrichtung nach Anspruch 8, wobei die Vorrichtung eine Falzvorrichtung ist, die umfasst:
eine Halteeinrichtung (908) zum Positionieren einer Plattenanordnung relativ zu dem Formelement, wobei die Plattenanordnung eine äußere Platte (100, 902), die aus dem Material mit geringer Formbarkeit hergestellt ist, und eine innere Platte (104, 906) aufweist,
wobei das Formelement ein Walzenelement ist; und
wobei die Energiequelle eine Wärmequelle ist, die sich gemeinsam mit dem Walzenelement bewegt, wobei die Wärmequelle angeordnet ist, um einen Energiestrahl auf einen örtlich begrenzten Abschnitt der Plattenanordnung in einem im Wesentlichen konstanten vorbestimmten Abstand vor dem Walzenelement abzustrahlen.

11. Vorrichtung nach Anspruch 10, wobei der vorbestimmte Abstand so ausgewählt wird, dass eine vorbestimmte Temperatur bereitgestellt wird, um eine vorbestimmte Formbarkeit an dem örtlich begrenzten Abschnitt der Plattenanordnung zu erlangen, wenn das Walzenelement den örtlich begrenzten Abschnitt der Plattenanordnung erreicht.

## Revendications

1. Procédé pour former un matériau à faible ductilité, comprenant les étapes consistant à :
fournir une première feuille (10) faite d'un matériau à faible ductilité ;
fournir un dispositif de mise en forme intégré comprenant une source de chaleur et un élément de mise en forme ; et
déplacer l'élément de mise en forme par rapport à la première feuille (10) le long d'une direction de mise en forme tout en chauffant simultanément une portion localisée de la première feuille (10) le long de la direction de mise en forme à une distance prédéterminée sensiblement constante en face de l'élément de mise en forme, dans lequel le chauffage comprend l'irradiation de la portion localisée de la première feuille (10) avec un faisceau laser (1102, 708, 914),
**caractérisé en ce que** le chauffage comprend en outre de faire varier l'angle d'incidence du faisceau laser (1102, 708, 914) sur la portion localisée de la première feuille (10).

2. Procédé selon la revendication 1, dans lequel le matériau à faible ductilité est au moins un matériau parmi aluminium, alliage d'aluminium, magnésium, et alliage de magnésium.

3. Procédé selon la revendication 1, comprenant la fourniture d'un contrôleur logique programmable pour récupérer une température de mise en forme prédéterminée pour le matériau à faible ductilité et un angle d'incidence du faisceau laser (1102, 708, 914) sur la portion localisée de la première feuille (10).

4. Procédé selon la revendication 1, comprenant les étapes consistant à : fournir une seconde feuille (10) adjacente à la première feuille (10) ; et fixer la première feuille (10) par rapport à la seconde feuille (10), ladite première feuille (10) ayant une bride périphérique (102) et ladite seconde feuille (10) ayant un bord périphérique (105) ; dans lequel le déplacement de l'élément de mise en forme comprend de déplacer l'élément de mise en forme par rapport à la première et à la seconde feuille (10) pour plier la bride périphérique (102) de la première feuille (10) par-dessus le bord périphérique (105) de la seconde feuille (10) le long de la direction de mise en forme le long de la bride périphérique (102) tout en chauffant simultanément la portion localisée de la première feuille (10) à l'intérieur de la bride périphérique (102) de celle-ci et le long de la direction de mise en forme à une distance prédéterminée sensiblement constante en face de l'élément de mise en forme.

5. Procédé selon la revendication 1 ou 4, dans lequel la distance prédéterminée est sélectionnée de manière à entraîner une température prédéterminée pour atteindre une ductilité prédéterminée au niveau de la portion localisée quand l'élément à rouleau atteint la portion localisée.

6. Procédé selon la revendication 4, dans lequel le chauffage comprend l'irradiation de la portion localisée avec un faisceau énergétique.

7. Procédé selon la revendication 1 ou 6, dans lequel la portion localisée est chauffée à une température dans une plage d'environ 150° C à environ 500° C au moyen du faisceau énergétique.

8. Appareil pour former un matériau à faible ductilité comprenant un dispositif de mise en forme intégré incluant un élément de mise en forme et une source d'énergie, dans lequel l'élément de mise en forme et la source d'énergie avancent simultanément par rapport au matériau à faible ductilité, **caractérisé en ce que** la source d'énergie est une source laser qui est adaptée à faire varier l'angle d'incidence du faisceau laser (1102, 708, 914) sur la portion localisée de la première feuille (10).

9. Appareil selon la revendication 8, dans lequel l'élément de mise en forme comprend un élément de mise en forme à rouleau ayant au moins un rouleau.

10. Appareil selon la revendication 8, l'appareil étant un appareil à ourler comprenant :
un dispositif de retenue (908) pour positionner un assemblage formant panneau par rapport à l'élément de mise en forme, l'assemblage formant panneau incluant un panneau extérieur (100, 902) formé à partir du matériau à faible ductilité, et un panneau intérieur (104, 906),
dans lequel l'élément de mise en forme est un élément à rouleau ; et
dans lequel la source d'énergie est une source de chaleur qui se déplace à l'unisson avec l'élément à rouleau, la source de chaleur étant disposée pour émettre un faisceau énergétique sur une portion localisée de l'assemblage formant panneau à une distance prédéterminée sensiblement constante en face de l'élément à rouleau.

11. Appareil selon la revendication 10, dans lequel la distance prédéterminée est sélectionnée de manière à entraîner une température prédéterminée pour atteindre une ductilité prédéterminée au niveau de la portion localisée de l'assemblage formant panneau quand l'élément à rouleau atteint la portion localisée de l'assemblage formant panneau.
